(19) **Europäisches Patentamt / European Patent Office / Office européen des brevets**

(11) **EP 2 158 721 B1**

(12) **FASCICULE DE BREVET EUROPEEN**

(45) Date de publication et mention de la délivrance du brevet:
**18.04.2018 Bulletin 2018/16**

(21) Numéro de dépôt: **08805828.4**

(22) Date de dépôt: **22.05.2008**

(51) Int Cl.:
*G06F 21/55* (2013.01)   *G06F 21/86* (2013.01)
*G06Q 20/34* (2012.01)   *G07F 7/08* (2006.01)
*G07F 7/10* (2006.01)   *H04L 9/08* (2006.01)
*H04L 9/32* (2006.01)   *H05K 5/02* (2006.01)

(86) Numéro de dépôt international:
**PCT/FR2008/050883**

(87) Numéro de publication internationale:
**WO 2008/145942 (04.12.2008 Gazette 2008/49)**

(54) **PROCEDE ET DISPOSITIF DE DETECTION D'UNE TENTATIVE DE SUBSTITUTION D'UNE PORTION DE BOITIER D'ORIGINE D'UN SYSTEME ELECTRONIQUE PAR UNE PORTION DE BOITIER DE REMPLACEMENT**

VERFAHREN UND EINRICHTUNG ZUM DETEKTIEREN EINES VERSUCHS, EINEN ORIGINALGEHÄUSETEIL EINES ELEKTRONISCHEN SYSTEMS MIT EINEM ERSATZGEHÄUSETEIL ZU ERSETZEN

METHOD AND DEVICE FOR DETECTING AN ATTEMPT TO SUBSTITUTE AN ORIGINAL CASING PORTION OF AN ELECTRONIC SYSTEM WITH A REPLACEMENT CASING PORTION

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **24.05.2007 FR 0755232**

(43) Date de publication de la demande:
**03.03.2010 Bulletin 2010/09**

(73) Titulaire: **Ingenico Group**
**75015 Paris (FR)**

(72) Inventeurs:
• **COUSSIEU, Alain**
**F-75015 Paris (FR)**
• **ECK, Alain**
**F-75015 Paris (FR)**

(74) Mandataire: **Thibon, Laurent et al**
**Cabinet Beaumont**
**1, rue Champollion**
**38000 Grenoble (FR)**

(56) Documents cités:
GB-A- 2 411 756       JP-A- 2001 291 050
US-A- 5 745 576       US-A1- 2004 003 232
US-A1- 2006 195 705

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 2 158 721 B1**

**Description**

Domaine de l'invention

La présente invention concerne un dispositif et un procédé de détection d'une tentative de substitution d'une portion de boîtier d'origine d'un système électronique par une portion de boîtier de remplacement.

Exposé de l'art antérieur

Pour de nombreux systèmes électroniques, il est souhaitable d'empêcher à un tiers non autorisé l'accès aux composants internes du système électronique et/ou aux données échangées par les composants internes du système électronique. Pour ce faire, on peut prévoir des dispositifs de sécurité permettant la détection d'une tentative d'accès non autorisé au système électronique.

C'est le cas, par exemple, d'un lecteur de cartes, notamment de cartes bancaires, utilisé pour effectuer des opérations de paiement. Le lecteur de cartes est généralement constitué d'un boîtier comprenant au moins une portion inférieure de boîtier reliée à une portion supérieure de boîtier. Le boîtier contient un circuit imprimé auquel sont reliés les composants électroniques du lecteur.

Le lecteur peut comprendre un circuit intégré, appelé cryptoprocesseur, dédié au traitement de données sensibles, par exemple les codes confidentiels des cartes introduites dans le lecteur. Il est souhaitable d'empêcher qu'un tiers non autorisé accède à ces données sensibles. Pour ce faire, le cryptoprocesseur peut également être dédié à la détection de tentatives d'accès non autorisé au lecteur. Il reçoit alors des signaux d'alarme fournis par des dispositifs de sécurité équipant le lecteur. Un exemple de dispositif de sécurité correspond à un circuit comportant une piste conductrice en forme de treillis. Une interruption de la piste conductrice est considérée comme étant représentative d'une tentative d'accès non autorisé au lecteur et se traduit par la fourniture d'un signal d'alarme au cryptoprocesseur. Un autre exemple de dispositif de sécurité correspond à une touche factice prévue au niveau du clavier. En fonctionnement normal, la touche assure en permanence la connexion électrique entre deux pistes conductrices du circuit imprimé. L'interruption de la connexion électrique est considérée comme étant représentative d'une tentative d'accès non autorisé au lecteur et se traduit par la fourniture d'un signal d'alarme au cryptoprocesseur. Lorsque le cryptoprocesseur détecte qu'une tentative d'accès non autorisé a lieu, il interrompt le fonctionnement normal du lecteur et, en particulier, efface les données sensibles.

Toutefois, la seule détection des tentatives d'accès non autorisé peut être insuffisante pour assurer une protection acceptable des données sensibles. En effet, on peut imaginer un type particulier de fraude qui consisterait, en parvenant à neutraliser temporairement les dispositifs de sécurité, à remplacer la portion supérieure de boîtier d'origine par une portion supérieure de boîtier qui aurait été modifiée au préalable de façon à pouvoir être facilement retirée par la suite sans entraîner la détection d'une tentative d'accès non autorisé par le cryptoprocesseur. De ce fait, un utilisateur pourrait alors se servir du lecteur sans se rendre compte de la modification effectuée et fournir son code confidentiel. Le code confidentiel pourrait ensuite être facilement récupéré par un tiers en retirant la portion de boîtier modifiée.

Il est donc souhaitable, outre la détection des tentatives d'accès non autorisé, que le cryptoprocesseur vérifie en permanence si au moins certaines pièces constituant le lecteur correspondent bien aux pièces d'origine.

Résumé de l'invention

La présente invention vise un procédé et un dispositif de détection d'une tentative de substitution non autorisée d'une pièce d'origine d'un système électronique par une pièce de remplacement.

Selon un autre objet, le dispositif de détection modifie peu le système électronique au niveau duquel il est prévu.

Ainsi, un exemple de réalisation de la présente invention prévoit un système électronique comprenant un boîtier constitué au moins d'une première portion de boîtier reliée à une seconde portion de boîtier et contenant un dispositif de détection de la substitution de la première portion de boîtier. Le dispositif comprend un premier circuit intégré destiné à être fixé à la première portion de boîtier ; et un second circuit intégré destiné à être fixé à la seconde portion de boîtier et adapté à transmettre au premier circuit intégré des signaux numériques successifs aléatoires ou pseudo-aléatoires, le premier circuit intégré étant adapté à renvoyer au second circuit intégré, pour chaque signal numérique, une première signature cryptée à partir dudit signal numérique, le second circuit intégré étant adapté à déterminer une seconde signature cryptée à partir dudit signal numérique et à détecter une substitution de la première portion de boîtier si les première et seconde signatures cryptées sont différentes.

Selon un exemple de réalisation, le premier circuit intégré comporte une première mémoire dans laquelle sont stockés un numéro d'identification et une première clé et le second circuit intégré comporte une seconde mémoire dans laquelle est stockée une deuxième clé, le premier circuit intégré étant adapté à transmettre le numéro d'identification au second circuit intégré, le second circuit intégré étant adapté à transmettre le numéro d'identification à un outil d'activation extérieur au lecteur et à recevoir la deuxième clé, égale à la première clé, déterminée par l'outil d'activation par une première fonction de cryptage à partir du numéro d'identification et d'une troisième clé, le premier circuit intégré étant adapté à déterminer, pour chaque signal numérique, la première signature cryptée par une seconde fonction de cryptage à partir dudit signal numérique et de la première clé, le second circuit intégré étant adapté à déterminer la seconde signature cryptée par la seconde fonction de cryptage à partir dudit signal numérique et de la deuxième clé.

Selon un exemple de réalisation, le premier circuit intégré est relié au second circuit intégré par une liaison filaire.

Selon un exemple de réalisation, le premier circuit intégré est relié au second circuit intégré par une liaison capacitive.

Selon un exemple de réalisation, le système correspond à un lecteur de cartes, notamment pour la réalisation d'opérations de paiement.

Il est également prévu un procédé de détection de la substitution d'une première portion de boîtier d'un système comprenant, en outre, une seconde portion de boîtier reliée à la première portion de boîtier. Le procédé consiste à prévoir un premier circuit intégré fixé à la première portion de boîtier et un second circuit intégré fixé à la seconde portion de boîtier ; à amener le second circuit intégré à transmettre au premier circuit intégré des signaux numériques successifs aléatoires ou pseudo-aléatoires ; à amener le premier circuit intégré à renvoyer au second circuit intégré, pour chaque signal numérique, une première signature cryptée à partir dudit signal numérique ; et à amener le second circuit intégré à déterminer une seconde signature cryptée à partir dudit signal numérique et à détecter une substitution de la première portion de boîtier si les première et seconde signatures cryptées sont différentes.

Selon un exemple de réalisation, le procédé comprend les étapes suivantes :

a) stocker dans le premier circuit intégré un numéro d'identification et une première clé qui n'est pas accessible depuis l'extérieur du premier circuit intégré ;
b) amener, dans une phase d'activation, le premier circuit intégré à transmettre le numéro d'identification au second circuit intégré ;
c) amener, dans la phase d'activation, le second circuit intégré à transmettre le numéro d'identification à un outil d'activation extérieur au lecteur ;
d) amener, dans la phase d'activation, l'outil d'activation à déterminer une deuxième clé, égale à la première clé, par une première fonction de cryptage à partir du numéro d'identification et d'une troisième clé ;
e) amener, dans la phase d'activation, l'outil d'activation à transmettre la deuxième clé au second circuit intégré ;
f) amener, dans une phase de fonctionnement normal, le second circuit intégré à transmettre au premier circuit intégré les signaux numériques successifs aléatoires ou pseudo-aléatoires ;
g) amener, dans la phase de fonctionnement normal, le premier circuit intégré à renvoyer au second circuit intégré, pour chaque signal numérique, la première signature cryptée déterminée par une seconde fonction de cryptage à partir dudit signal numérique et de la première clé ; et
h) amener, dans la phase de fonctionnement normal, le second circuit intégré à déterminer la seconde signature cryptée par la seconde fonction de cryptage à partir dudit signal numérique et de la deuxième clé, et à détecter une substitution de la première portion de boîtier si les première et seconde signatures cryptées sont différentes.

Selon un exemple de réalisation, le procédé comprend en outre l'étape consistant à amener le second circuit intégré à effacer la deuxième clé dans le cas où les première et seconde signatures cryptées sont différentes à l'étape h), la réutilisation du lecteur nécessitant alors à nouveau la mise en oeuvre des étapes b) à e).

Selon un exemple de réalisation, la première fonction de cryptage est une fonction du type DES ou Triple DES et/ou la seconde fonction de cryptage est une fonction du type SHA.

Brève description des dessins

Ces objets, caractéristiques et avantages, ainsi que d'autres seront exposés en détail dans la description suivante d'un exemple de réalisation particulier faite à titre non-limitatif en relation avec les figures jointes parmi lesquelles :

la figure 1 est une vue en perspective schématique d'un exemple de lecteur de carte ;
la figure 2 est une section schématique du lecteur de la figure 1 et représente un exemple de dispositif de détection d'une tentative de substitution non autorisée d'une portion du boîtier du lecteur ;
la figure 3 représente, sous la forme d'un schéma par blocs, des étapes d'un exemple de procédé de détection de tentative de substitution non autorisée d'une pièce d'origine au cours d'une phase d'activation ; et
la figure 4 représente, sous la forme d'un schéma par blocs, des étapes successives du procédé de détection au cours d'une phase de fonctionnement normal.

Description détaillée

Par souci de clarté, de mêmes éléments ont été désignés par de mêmes références aux différentes figures.

La présente invention va maintenant être décrite pour un lecteur, par exemple un lecteur de cartes, utilisé, par exemple, pour la réalisation d'opérations de paiement. Toutefois, il est clair que la présente invention peut s'appliquer à n'importe quel système électronique pour lequel il est souhaitable qu'une tentative de substitution non autorisée d'une portion de boîtier d'origine du système électronique par une portion de boîtier de remplacement soit détectée.

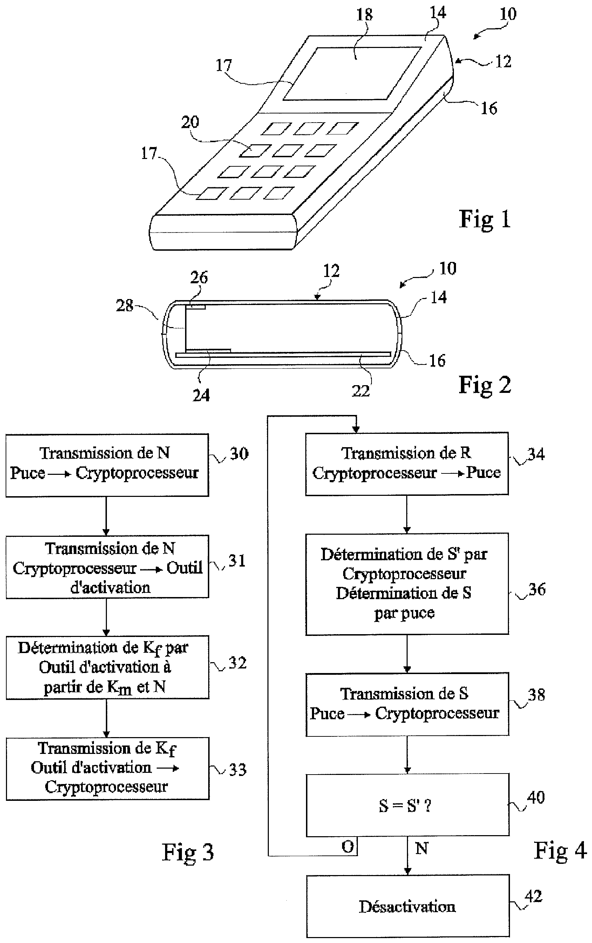

La figure 1 représente de façon schématique un exemple de réalisation d'un lecteur de carte 10. Le lecteur 10 comprend un boîtier 12 constitué d'une portion supérieure de boîtier 14 et d'une portion inférieure de boîtier 16. Des ouvertures 17 sont prévues au niveau de la portion supérieure de boîtier 14 pour un écran d'affichage 18 et des touches d'un clavier 20. En outre, une ouverture, non représentée, est prévue dans le boîtier 12 pour permettre l'introduction de cartes.

La figure 2 est une section schématique du lecteur 10 de la figure 1. Le boîtier 12 contient un circuit imprimé 22, appelé carte mère, fixé à la portion inférieure de boîtier 16 et sur lequel sont connectés les composants électroniques du lecteur 10. En particulier, un circuit intégré 24, appelé cryptoprocesseur, est connecté à la carte mère 22 et est dédié à la manipulation de données sensibles utilisées par le lecteur 10. A titre d'exemple, les données sensibles peuvent correspondre à des clés utilisées lors d'opérations de cryptage mises en oeuvre par le cryptoprocesseur 24. Il peut s'agir également des codes confidentiels des cartes utilisées avec le lecteur 10.

Le cryptoprocesseur 24 est également dédié à la détection de tentatives d'accès non autorisé au lecteur 10. Pour ce faire, le cryptoprocesseur 24 est relié à des dispositifs de sécurité, non représentés, adaptés à fournir au cryptoprocesseur 24 des signaux d'alarme dans le cas où se produit une tentative d'accès non autorisé. Les dispositifs de sécurité peuvent comprendre des circuits de sécurité de type treillis et/ou des touches de clavier factices ou tous autres dispositifs de détection de tentative d'intrusion. Dans le cas où le cryptoprocesseur 24 détecte qu'une tentative d'accès non autorisé a lieu, il passe dans un mode de désactivation dans lequel il interrompt le fonctionnement du lecteur 10 et efface les données sensibles.

Les composants du lecteur, dont le cryptoprocesseur 24, sont alimentés à partir d'une même source d'alimentation générale, par exemple l'alimentation du secteur. Le lecteur 10 peut comprendre une source d'alimentation de secours, correspondant, par exemple, à une pile au lithium, assurant l'alimentation du cryptoprocesseur 24 dans le cas où la source d'alimentation générale n'est pas présente. Lorsqu'il est alimenté par la source d'alimentation de secours, le cryptoprocesseur 24 fonctionne dans un mode dégradé dans lequel il assure seulement la détection de tentatives d'accès non autorisé.

La présente invention prévoit d'associer une puce de circuit intégré 26 à chaque élément du lecteur 10 pour lequel on souhaite qu'une tentative de substitution non autorisée soit détectée. Dans le présent exemple, la puce 26 est fixée à la portion supérieure de boîtier 14. Elle est, par exemple, collée à la portion supérieure de boîtier 14, ou surmoulée à celle-ci, de sorte qu'il ne soit pas possible de retirer la puce 26 de la portion supérieure de boîtier 14 sans interrompre le fonctionnement de la puce 26.

La puce 26 est reliée au cryptoprocesseur 24 de façon à permettre l'échange de signaux entre la puce 26 et le cryptoprocesseur 24. L'alimentation de la puce 26 peut être assurée par le cryptoprocesseur 24. A titre d'exemple, la puce 26 peut être reliée au cryptoprocesseur 24 par une liaison filaire 28 de sorte que le moindre déplacement de la portion supérieure de boîtier 14 par rapport à la portion inférieure de boîtier 16 entraîne l'interruption de la liaison électrique entre la puce 26 et le cryptoprocesseur 24. A titre de variante, la liaison entre le cryptoprocesseur 24 et la puce 26 peut être réalisée par n'importe quel moyen adapté. A titre d'exemple, on peut prévoir une liaison sans fil, par exemple une liaison capacitive.

La puce 26 comprend une mémoire dans laquelle est stockée un numéro de série N qui correspond par exemple à un signal binaire codé sur plusieurs dizaines de bits, par exemple 32 bits. En outre, une clé $K_f$ est stockée au niveau de la puce 26. La clé $K_f$ correspond, par exemple, à un signal binaire codé sur plusieurs dizaines de bits, par exemple 64 bits. La clé $K_f$ est stockée au niveau de la puce 26 par tout procédé classique de façon à ne pas pouvoir être lue par un utilisateur ayant accès à la puce 26. Le numéro de série N et la clé $K_f$ sont stockés dans la puce 26 lors de sa fabrication et restent mémorisés même lorsque la puce 26 n'est pas alimentée.

La puce 26 est adaptée à recevoir un signal R, appelé par la suite aléa, fourni par le cryptoprocesseur 24. L'aléa R est un signal binaire codé sur plusieurs dizaines de bits, par exemple de 64 bits à 128 bits. La puce 26 est adaptée à fournir au cryptoprocesseur 24 un signal binaire S, appelée par la suite signature de puce. La signature de puce S est obtenue par la relation suivante :

$$S = F_1(N, R, K_f) \tag{1}$$

où $F_1$ est une fonction de cryptage mise en oeuvre par la puce 26 et correspond, par exemple, à une fonction de hachage cryptographique de type SHA (acronyme anglais pour Secure Hash Algorithm). La fonction de cryptage $F_1$ peut être mise en oeuvre par voie matérielle (par câblage) ou par voie logicielle.

Le cryptoprocesseur 24 est également adapté à mettre en oeuvre la fonction de cryptage $F_1$ par voie matérielle (par câblage) ou par voie logicielle. Le cryptoprocesseur 24 est, en outre, adapté à fournir des nouvelles valeurs de l'aléa R selon un processus aléatoire ou pseudo-aléatoire. La fourniture de l'aléa R peut être réalisée par voie matérielle (par câblage) ou par voie logicielle.

Le lecteur 10 est adapté à échanger des signaux avec un outil d'activation (non représenté) extérieur au lecteur 10. L'outil d'activation peut correspondre à un système électronique manipulé par un opérateur ou à un ou plusieurs ordinateurs distants du lecteur 10 et auxquels le lecteur 10 peut être relié par l'intermédiaire d'un réseau de communication. Une clé mère $K_m$ est stockée au niveau de l'outil d'activation. L'outil d'activation est adapté à mettre en oeuvre une fonction de cryptage $F_2$, par exemple du type Triple DES (DES étant un acronyme anglais pour Data Encryption Standard). La clé $K_f$ de la puce 26 est définie de sorte qu'elle puisse être déterminée par l'outil d'activation à partir du numéro de série N et de la clé mère $K_m$ par la relation suivante :

$$K_f = F_2(N, \ K_m) \tag{2}$$

Un exemple de procédé de détection d'une tentative de substitution de la pièce à laquelle la puce 26 est fixée, c'est-à-dire la portion supérieure de boîtier 14 dans le présent exemple de réalisation, va maintenant être décrit. Le procédé comprend une phase d'activation et une phase de fonctionnement normal.

La figure 3 représente un exemple d'étapes successives de la phase d'activation qui se produit la première fois que le cryptoprocesseur 24 est relié à la puce 26. La phase d'activation peut débuter par la connexion du cryptoprocesseur 24 désactivé à l'outil d'activation.

A l'étape 30, suite à une requête du cryptoprocesseur 24, la puce 26 transmet au cryptoprocesseur 24 le numéro de série N. Le numéro de série N est alors mémorisé au niveau du cryptoprocesseur 24. Le procédé se poursuit à l'étape 31.

A l'étape 31, le cryptoprocesseur 24 fournit le numéro de série N à l'outil d'activation. Le procédé se poursuit à l'étape 32.

A l'étape 32, l'outil d'activation détermine la clé $K_f$ associée à la puce 26 à partir de la relation (2) précédemment décrite. Le procédé se poursuit à l'étape 33.

A l'étape 33, l'outil d'activation fournit la clé $K_f$ au cryptoprocesseur 24. La clé $K_f$ est alors mémorisée au niveau du cryptoprocesseur 24. La clé $K_f$ fait partie des données sensibles qui sont effacées lorsque le cryptoprocesseur 24 détecte une tentative d'accès non autorisé au lecteur 10.

La figure 4 représente un exemple d'étapes successives de la phase de fonctionnement normal du procédé de détection de substitution. La phase de fonctionnement normal est mise en oeuvre de façon identique que le cryptoprocesseur 24 soit alimenté par la source d'alimentation générale du lecteur 10 ou par la source d'alimentation de secours. Dans la phase de fonctionnement normal, des signaux sont échangés entre le cryptoprocesseur 24 et le lecteur 26 de façon cyclique tant que le cryptoprocesseur 24 ne détecte pas de tentative de substitution non autorisée.

A l'étape 34, le cryptoprocesseur 24 détermine une nouvelle valeur aléatoire ou pseudo-aléatoire de l'aléa R. Le signal R est fourni à la puce 26 par la liaison 28. Le procédé se poursuit à l'étape 36. A titre d'exemple, le cryptoprocesseur 24 peut être cadencé par un signal d'horloge à 100 kHz. Les nouvelles valeurs de l'aléa R peuvent être émises par le cryptoprocesseur 24 à une fréquence de 1 à 10 Hz, les bits de l'aléa R étant alors fournis à une fréquence de 1 à 10 kHz.

A l'étape 36, le cryptoprocesseur 24 détermine un signal S', appelé signature de cryptoprocesseur, qui correspond à un signal binaire codé sur plusieurs dizaines de bits et qui est déterminé à partir du numéro de série N, de la clé $K_f$ et de l'aléa R selon la relation suivante :

$$S' = F_1(N, \ K_f, \ R) \tag{3}$$

Parallèlement, la puce 26 détermine la signature de puce S selon la relation (1) précédemment décrite. Le procédé se poursuit à l'étape 38.

A l'étape 38, la puce 26 fournit la signature de puce S au cryptoprocesseur 24 par la liaison filaire 28. Le procédé se poursuit à l'étape 40.

A l'étape 40, le cryptoprocesseur 24 compare les signatures S et S'. Dans le cas où la signature de puce S est égale à la signature de cryptoprocesseur S', ceci signifie que la portion supérieure de boîtier 14 à laquelle la puce 26 est liée est authentique. Le procédé recommence alors à l'étape 34 par la détermination d'une nouvelle valeur de l'aléa R par le cryptoprocesseur 24.

Si à l'étape 40, le cryptoprocesseur 24 détermine que la signature de puce S est différente de la signature de cryptoprocesseur S', le procédé se poursuit à l'étape 42.

A l'étape 42, le cryptoprocesseur 24 a détecté qu'une tentative de substitution non autorisée a eu lieu. Il passe alors, comme lors de la détection d'une tentative d'accès non autorisé, dans le mode de désactivation dans lequel il interrompt le fonctionnement du lecteur 10. En outre, l'ensemble des données sensibles sont effacées. De ce fait, la clé $K_f$ stockée au niveau du cryptoprocesseur 24 à la phase d'activation est effacée. L'arrêt du mode de désactivation du cryptoprocesseur 24 et la reprise d'un fonctionnement normal nécessite l'intervention d'un opérateur autorisé et débute par une nouvelle phase d'activation avec l'outil d'activation disposant de $K_m$.

A l'étape 40, une différence entre les signatures S et S' peut avoir des causes différentes. Selon un premier exemple, l'absence de transmission de la signature S par la puce 26 entraîne la détection d'une tentative de substitution par le cryptoprocesseur 24. C'est le cas, par exemple, lorsque la liaison 28 entre la puce 26 et le cryptoprocesseur 24 est interrompue. La puce 26 joue alors le rôle d'un dispositif de sécurité classique. Selon un second exemple, une différence entre les signatures S et S' peut avoir pour origine le remplacement de la portion supérieure de boîtier 14 par une portion supérieure de boîtier provenant d'un autre lecteur. Dans ce cas, le numéro de série de la puce de la portion supérieure de boîtier substituée étant différent du numéro de série de la puce de la portion supérieure de boîtier d'origine, la clé $K_f$ de la puce est différente de la clé $K_f$ du cryptoprocesseur 24 de sorte que la signature S fournie par la puce de la portion de boîtier substituée est différente de la signature S' déterminée par le cryptoprocesseur 24.

De façon avantageuse, la fonction de cryptage $F_1$, mise en oeuvre au niveau du cryptoprocesseur 24 et de la puce 26, peut être implémentée par voie matérielle (par câblage). La détermination des signatures S et S' peut alors être réalisée avec un nombre réduit de cycles d'horloge et pour une faible consommation. Ceci est avantageux dans le cas où le cryptoprocesseur 24 est seulement alimenté par la source d'alimentation de secours. En outre, de façon avantageuse, l'aléa R transmis par le cryptoprocesseur 24 à la puce 26 étant un signal aléatoire ou pseudo-aléatoire, la séquence de signaux échangés entre le cryptoprocesseur 24 et la puce 26 ne peut être connue à l'avance par un tiers qui aurait accès à ces signaux.

A titre de variante, la liaison entre le cryptoprocesseur 24 et la puce 26 peut être n'importe quel type de liaison à distance. Il s'agit, par exemple, d'une liaison à distance par antenne, mettant en oeuvre un protocole d'échange de données du type identification par radiofréquence ou RFID (acronyme anglais pour Radio Frequency Identification). Toutefois, il est souhaitable que la liaison entre la puce 26 et le cryptoprocesseur 24 soit interrompue dès que la portion supérieure de boîtier 14, à laquelle la puce 26 est fixée, est déplacée par rapport à la portion inférieure de boîtier 16. Il est donc nécessaire de prévoir une liaison par radiofréquence ayant une portée réduite tout en assurant une transmission convenable des signaux entre la puce 26 et le cryptoprocesseur 24 en fonctionnement normal.

Des modes de réalisation particuliers de la présente invention ont été décrits. Diverses variantes et modifications apparaîtront à l'homme de l'art. En particulier, bien que l'invention ait été décrite dans le cas où la puce 26 est fixée à la portion supérieure de boîtier 14 et le cryptoprocesseur 24 est fixé à la portion inférieure de boîtier 16, la puce 26 et le cryptoprocesseur 24 pourraient être fixés à d'autres éléments du lecteur 10. En particulier, la puce 26 pourrait être fixée à une membrane formant le clavier 20.

## Revendications

1. Lecteur de cartes (10) comprenant un boîtier (12) constitué au moins d'une première portion de boîtier (14) reliée à une seconde portion de boîtier (16), un écran d'affichage (18), un clavier (20) comprenant des touches, la première portion de boîtier comprenant des ouvertures (17) pour l'écran d'affichage et les touches, le boîtier comprenant un circuit imprimé (22) fixé à la seconde portion de boîtier et un dispositif de détection de la substitution de la première portion de boîtier (14), le dispositif étant **caractérisé en ce qu'**il comprend :

   un premier circuit intégré (26) fixé à la première portion de boîtier ; et
   un second circuit intégré (24) fixé au circuit imprimé et adapté à transmettre au premier circuit intégré des signaux numériques successifs aléatoires ou pseudo-aléatoires (R), le premier circuit intégré étant adapté à renvoyer au second circuit intégré, pour chaque signal numérique, une première signature cryptée (S) à partir dudit signal numérique, le second circuit intégré étant adapté à déterminer une seconde signature cryptée (S') à partir dudit signal numérique et à détecter une substitution de la première portion de boîtier si les première et seconde signatures cryptées sont différentes.

2. Lecteur de cartes selon la revendication 1, dans lequel le premier circuit intégré (26) comporte une première mémoire dans laquelle sont stockés un numéro d'identification (N) et une première clé ($K_f$) et dans lequel le second circuit intégré (24) comporte une seconde mémoire dans laquelle est stockée une deuxième clé ($K_f$), le premier circuit intégré étant adapté à transmettre le numéro d'identification au second circuit intégré, le second circuit intégré étant adapté à transmettre le numéro d'identification à un outil d'activation extérieur au lecteur (10) et à recevoir la deuxième clé, égale à la première clé, déterminée par l'outil d'activation par une première fonction de cryptage à partir du numéro d'identification et d'une troisième clé ($K_m$), le premier circuit intégré étant adapté à déterminer, pour chaque signal numérique, la première signature cryptée (S) par une seconde fonction de cryptage à partir dudit signal numérique et de la première clé, le second circuit intégré étant adapté à déterminer la seconde signature cryptée (S') par la seconde fonction de cryptage à partir dudit signal numérique et de la deuxième clé.

3. Lecteur de cartes selon les revendications 1 ou 2, dans lequel le premier circuit intégré (26) est relié au second circuit intégré (24) par une liaison filaire (28).

4. Lecteur de cartes selon les revendications 1 ou 2, dans lequel le premier circuit intégré (26) est relié au second circuit intégré (24) par une liaison capacitive.

5. Procédé de détection de la substitution d'une première portion de boîtier (14) d'un lecteur de cartes (10) comprenant, en outre, une seconde portion de boîtier (16) reliée à la première portion de boîtier, la première portion de boîtier et la seconde portion de boîtier formant un boîtier, le lecteur de cartes comprenant, en outre, un écran d'affichage (18), un clavier (20) comprenant des touches, la première portion de boîtier comprenant des ouvertures (17) pour l'écran d'affichage et les touches, le boîtier comprenant un circuit imprimé (22) fixé à la seconde portion de boîtier, le procédé étant **caractérisé en ce qu'**il comprend les étapes suivantes :

prévoir un premier circuit intégré (26) fixé à la première portion de boîtier et un second circuit intégré (24) fixé au circuit imprimé ;
amener le second circuit intégré à transmettre au premier circuit intégré des signaux numériques successifs aléatoires ou pseudo-aléatoires (R) ;
amener le premier circuit intégré à renvoyer au second circuit intégré, pour chaque signal numérique, une première signature cryptée (S) à partir dudit signal numérique ; et
amener le second circuit intégré à déterminer une seconde signature cryptée (S') à partir dudit signal numérique et à détecter une substitution de la première portion de boîtier si les première et seconde signatures cryptées sont différentes.

6. Procédé de détection selon la revendication 5, comprenant les étapes suivantes :

a) stocker dans le premier circuit intégré (26) un numéro d'identification (N) et une première clé ($K_f$) qui n'est pas accessible depuis l'extérieur du premier circuit intégré ;
b) amener, dans une phase d'activation, le premier circuit intégré à transmettre le numéro d'identification au second circuit intégré (24) ;
c) amener, dans la phase d'activation, le second circuit intégré à transmettre le numéro d'identification à un outil d'activation extérieur au lecteur (10) ;
d) amener, dans la phase d'activation, l'outil d'activation à déterminer une deuxième clé ($K_f$), égale à la première clé, par une première fonction de cryptage à partir du numéro d'identification et d'une troisième clé ($K_m$) ;
e) amener, dans la phase d'activation, l'outil d'activation à transmettre la deuxième clé au second circuit intégré ;
f) amener, dans une phase de fonctionnement normale, le second circuit intégré à transmettre au premier circuit intégré les signaux numériques successifs aléatoires ou pseudo-aléatoires (R) ;
g) amener, dans la phase de fonctionnement normale, le premier circuit intégré à renvoyer au second circuit intégré, pour chaque signal numérique, la première signature cryptée (S) déterminée par une seconde fonction de cryptage à partir dudit signal numérique et de la première clé ; et
h) amener, dans la phase de fonctionnement normale, le second circuit intégré à déterminer la seconde signature cryptée (S') par la seconde fonction de cryptage à partir dudit signal numérique et de la deuxième clé, et à détecter une substitution de la première portion de boîtier si les première et seconde signatures cryptées sont différentes.

7. Procédé selon la revendication 6, comprenant en outre l'étape consistant à amener le second circuit intégré (24) à effacer la deuxième clé ($K_f$) dans le cas où les première et seconde signatures cryptées (S, S') sont différentes à l'étape h), la réutilisation du lecteur (10) nécessitant alors à nouveau la mise en oeuvre des étapes b) à e).

8. Procédé selon la revendication 6 ou 7, dans lequel la première fonction de cryptage est une fonction du type DES ou Triple DES et/ou dans lequel la seconde fonction de cryptage est une fonction du type SHA.

**Patentansprüche**

1.  Kartenleser (10), der ein Gehäuse (12) aufweist, welches aus zumindest einem ersten Gehäuseteil (14) geformt ist, der mit einem zweiten Gehäuseteil (16) verbunden ist, weiter aus einem Anzeigeschirm (18), einer Tastatur (20) mit Tasten, wobei der erste Gehäuseteil Öffnungen (17) für den Anzeigeschirm und die Tasten aufweist, wobei das Gehäuse eine Leiterplatte (22) enthält, die an dem zweiten Gehäuseteil angebracht ist, und eine Vorrichtung zum Detektieren des Ersetzens bzw. Austauschens des ersten Gehäuseteils (14), wobei die Vorrichtung **dadurch gekennzeichnet ist, dass** sie Folgendes aufweist:

    eine erste integrierte Schaltung (26), die an dem ersten Gehäuseteil angebracht ist; und
    eine zweite integrierte Schaltung (24), die an der Leiterplatte angebracht ist und fähig ist, aufeinanderfolgende zufällige oder pseudo-zufällige digitale Signale (R) an die erste integrierte Schaltung zu übertragen, wobei die erste integrierte Schaltung fähig ist, für jedes digitale Signal eine erste verschlüsselte Signatur (S) basierend auf dem digitalen Signal an die zweite integrierte Schaltung zurückzusenden, wobei die zweite integrierte Schaltung fähig ist, eine zweite verschlüsselte Signatur (S') basierend auf dem digitalen Signal zu bestimmen und ein Ersetzen des ersten Gehäuseteils zu detektieren, wenn die ersten und zweiten verschlüsselten Signaturen unterschiedlich sind.

2.  Kartenleser nach Anspruch 1, wobei die erste integrierte Schaltung (26) einen ersten Speicher aufweist, in dem eine Identifikationsnummer (N) und ein erster Schlüssel (Kf) gespeichert sind, und wobei die zweite integrierte Schaltung (24) einen zweiten Speicher aufweist, in dem ein zweiter Schlüssel (Kf) gespeichert ist, wobei die erste integrierte Schaltung fähig ist, die Identifikationsnummer an die zweite integrierte Schaltung zu übertragen, wobei die zweite integrierte Schaltung fähig ist, die Identifikationsnummer an ein Aktivierungswerkzeug außerhalb des Lesers (10) zu übertragen und den zweiten Schlüssel zu empfangen, der dem ersten Schlüssel gleich ist, und zwar bestimmt durch das Aktivierungswerkzeug durch eine erste Verschlüsselungsfunktion basierend auf der Identifikationsnummer und auf einem dritten Schlüssel (Km), wobei die erste integrierte Schaltung fähig ist, für jedes digitale Signal die erste verschlüsselte Signatur (S) durch eine zweite Verschlüsselungsfunktion zu bestimmen, und zwar basierend auf dem Digitalsignal und auf dem ersten Schlüssel, wobei die zweite integrierte Schaltung fähig ist, die zweite verschlüsselte Signatur (S') durch die zweite Verschlüsselungsfunktion basierend auf dem digitalen Signal und auf dem zweiten Schlüssel zu bestimmen.

3.  Kartenleser nach Anspruch 1 oder 2, wobei die erste integrierte Schaltung (26) mit der zweiten integrierten Schaltung (24) durch eine Drahtverbindung (28) verbunden ist.

4.  Kartenleser nach Anspruch 1 oder 2, wobei die erste integrierte Schaltung (26) mit der zweiten integrierten Schaltung (24) durch eine kapazitive Verbindung verbunden ist.

5.  Verfahren zum Detektieren des Ersetzens bzw. Austauschens eines ersten Gehäuseteils (14) eines Kartenlesers (10), der weiter einen zweiten Gehäuseteil (16) aufweist, der mit dem ersten Gehäuseteil verbunden ist, wobei der erste Gehäuseteil und der zweite Gehäuseteil ein Gehäuse bilden, wobei der Kartenleser weiter einen Anzeigeschirm (18) und eine Tastatur (20) mit Tasten aufweist, wobei der erste Gehäuseteil Öffnungen (17) für den Anzeigeschirm und die Tasten aufweist, wobei das Gehäuse eine Leiterplatte (22) enthält, die an dem zweiten Gehäusesteil angebracht ist, wobei das Verfahren **dadurch gekennzeichnet ist, dass** es Folgendes aufweist:

    Vorsehen einer ersten integrierten Schaltung (26), die an dem ersten Gehäuseteil angebracht ist, und einer zweiten integrierten Schaltung (24), die an der Leiterplatte angebracht ist;
    Veranlassen, dass die zweite integrierte Schaltung, aufeinanderfolgende zufällige oder pseudo-zufällige digitale Signale (R) an die erste integrierte Schaltung überträgt;
    Veranlassen, dass die erste integrierte Schaltung für jedes digitale Signal eine erste verschlüsselte Signatur (S) basierend auf dem digitalen Signal zurück zur zweiten integrierten Schaltung sendet; und
    Veranlassen, dass die zweite integrierte Schaltung eine zweite verschlüsselte Signatur (S') basierend auf dem digitalen Signal bestimmt und ein Ersetzen bzw. Austauschen des ersten Gehäuseteils detektiert, wenn die ersten und zweiten verschlüsselten Signaturen unterschiedlich sind.

6.  Detektionsverfahren nach Anspruch 5, welches folgende Schritte aufweist:

    a) Speichern einer Identifikationsnummer (N) und eines ersten Schlüssels (Kf), der nicht von außerhalb der ersten integrierten Schaltung zugänglich ist, in der ersten integrierten Schaltung (26);

b) Veranlassen, dass die zweite integrierte Schaltung in einer Aktivierungsphase die Identifikationsnummer an die zweite integrierte Schaltung (24) überträgt;

c) Veranlassen in der Aktivierungsphase, dass die zweite integrierte Schaltung die Identifikationsnummer an ein Aktivierungswerkzeug außerhalb des Lesers (10) überträgt;

d) Veranlassen in der Aktivierungsphase, dass das Aktivierungswerkzeug einen zweiten Schlüssel (Kf), gleich dem ersten Schlüssel, durch eine erste Verschlüsselungsfunktion basierend auf der Identifikationsnummer und einem dritten Schlüssel (Km) bestimmt;

e) Veranlassen in der Aktivierungsphase, dass das Aktivierungswerkzeug den zweiten Schlüssel an die zweite integrierte Schaltung überträgt;

f) Veranlassen in einer normalen Betriebsphase, dass die zweite integrierte Schaltung die aufeinanderfolgenden zufälligen oder pseudozufälligen digitale Signale (R) an die erste integrierte Schaltung überträgt,

g) Veranlassen in der normalen Betriebsphase, dass die erste integrierte Schaltung für jedes digitale Signal die erste verschlüsselte Signatur (S), die durch eine zweite Verschlüsselungsfunktion basierend auf dem digitalen Signal und auf dem ersten Schlüssel bestimmt wurde, zurück an die zweite integrierte Schaltung sendet, und

h) Veranlassen in der normalen Betriebsphase, dass die zweite integrierte Schaltung die zweite verschlüsselte Signatur (S') durch die zweite Verschlüsselungsfunktion basierend auf dem digitalen Signal und auf dem zweiten Schlüssel bestimmt und Detektieren eines Ersetzens bzw. Austauschens des ersten Gehäuseteils, wenn die ersten und zweiten verschlüsselten Signaturen unterschiedlich sind.

7. Verfahren nach Anspruch 6, welches weiter den Schritt aufweist, die zweite integrierte Schaltung (24) zu veranlassen, den zweiten Schlüssel (Kf) in dem Gehäuse zu löschen, wenn die ersten und die zweiten verschlüsselten Signaturen (S, S') im Schritt h) unterschiedlich sind, wobei das erneute Verwenden des Lesers (10) dann eine erneute Ausführung der Schritte b) bis e) erfordert.

8. Verfahren nach Anspruch 6 oder 7, wobei die erste Verschlüsselungsfunktion eine Funktion des DES- oder Triple-DES-Typs ist und/oder wobei die zweite Verschlüsselungsfunktion eine Funktion eines SHA-Typs ist.

## Claims

1. Card reader (10) comprising a package (12) formed of at least one first package portion (14) connected to a second package portion (16), a display screen (18), a keyboard (20) having keys, the first package portion comprising openings (17) for the display screen and the keys, the package containing a printed circuit (22) attached to the second package portion and a device for detecting the substitution of the first package portion (14), said device being **characterized in that** it comprises:

   a first integrated circuit (26) attached to the first package portion; and
   a second integrated circuit (24) attached to the printed circuit and capable of transmitting to the first integrated circuit successive random or pseudo-random digital signals (R), the first integrated circuit being capable of sending back to the second integrated circuit, for each digital signal, a first signature encrypted (S) based on said digital signal, the second integrated circuit being capable of determining a second signature encrypted (S') based on said digital signal and of detecting a substitution of the first package portion if the first and second encrypted signatures are different.

2. The card reader of claim 1, wherein the first integrated circuit (26) comprises a first memory in which are stored an identification number (N) and a first key (Kf) and the second integrated circuit (24) comprises a second memory in which is stored a second key (Kf), the first integrated circuit being capable of transmitting the identification number to the second integrated circuit, the second integrated circuit being capable of transmitting the identification number to an activation tool external to the reader (10) and of receiving the second key, equal to the first key, determined by the activation tool by a first encryption function based on the identification number and on a third key (Km), the first integrated circuit being capable of determining, for each digital signal, the first signature encrypted (S) by a second encryption function based on said digital signal and on the first key, the second integrated circuit being capable of determining the second signature encrypted (S') by the second encryption function based on said digital signal and on the second key.

3. The card reader of claim 1 or 2, wherein the first integrated circuit (26) is connected to the second integrated circuit (24) by a wire link (28).

4. The card reader of claim 1 or 2, wherein the first integrated circuit (26) is connected to the second integrated circuit (24) by a capacitive link.

5. A method for detecting the substitution of a first package portion (14) of a card reader (10) further comprising a second package portion (16) connected to the first package portion, the first package portion and the second package portion forming a package, the card reader further comprising a display screen (18), a keyboard (20) having keys, the first package portion comprising openings (17) for the display screen and the keys, the package containing a printed circuit (22) attached to the second package portion, the method being **characterized in that** it comprises:

   providing a first integrated circuit (26) attached to the first package portion and a second integrated circuit (24) attached to the printed circuit;
   having the second integrated circuit transmit to the first integrated circuit successive random or pseudo-random digital signals (R);
   having the first integrated circuit send back to the second integrated circuit, for each digital signal, a first signature encrypted (S) based on said digital signal; and
   having the second integrated circuit determine a second signature encrypted (S') based on said digital signal and detect a substitution of the first package portion if the first and second encrypted signatures are different.

6. The detection method of claim 5, comprising the steps of:

   a) storing in the first integrated circuit (26) an identification number (N) and a first key (Kf) which is not accessible from the outside of the first integrated circuit;
   b) having, in an activation phase, the second integrated circuit transmit the identification number to the second integrated circuit (24);
   c) having, in the activation phase, the second integrated circuit transmit the identification number to an activation tool external to the reader (10);
   d) having, in the activation phase, the activation tool determine a second key (Kf), equal to the first key, by a first encryption function based on the identification number and on a third key (Km);
   e) having, in the activation phase, the activation tool transmit the second key to the second integrated circuit;
   f) having, in a normal operating phase, the second integrated circuit transmit to the first integrated circuit the successive random or pseudo-random digital signals (R);
   g) having, in the normal operating phase, the first integrated circuit send back to the second integrated circuit, for each digital signal, the first encrypted signature (S) determined by a second encryption function based on said digital signal and on the first key; and
   h) having, in the normal operating phase, the second integrated circuit determine the second signature encrypted (S') by the second encryption function based on said digital signal and on the second key, and detect a substitution of the first package portion if the first and second encrypted signatures are different.

7. The method of claim 6, further comprising the step of having the second integrated circuit (24) delete the second key (Kf) in the case where the first and second encrypted signatures (S, S') are different at step h), the reusing of the reader (10) then requiring a new implementation of steps b) to e).

8. The method of claim 6 or 7, wherein the first encryption function is a function of DES or Triple DES type and/or the second encryption function is a function of SHA type.

Fig 1

Fig 2

| Transmission de N Puce → Cryptoprocesseur | 30 |
| Transmission de N Cryptoprocesseur → Outil d'activation | 31 |
| Détermination de $K_f$ par Outil d'activation à partir de $K_m$ et N | 32 |
| Transmission de $K_f$ Outil d'activation → Cryptoprocesseur | 33 |

Fig 3

| Transmission de R Cryptoprocesseur → Puce | 34 |
| Détermination de S' par Cryptoprocesseur Détermination de S par puce | 36 |
| Transmission de S Puce → Cryptoprocesseur | 38 |
| S = S' ? | 40 |
| Désactivation | 42 |

O    N

Fig 4